# EUROPEAN PATENT APPLICATION

(11) **EP 4 715 644 A1**
(43) Date of publication of application: **25.03.2026**
(21) Application number: 25224897.6
(22) Date of filing: 18.12.2025
(51) Int. Cl.: G06F 21/44, G06F 21/71, G06F 21/76

(54) **METHOD FOR VERIFYING ACCESS PERMISSION, INTEGRATED CIRCUIT SYSTEM, AND ELECTRONIC DEVICE**

(30) Priority: 23.10.2025 CN 202511528415
(71) Applicant: XG TECH PTE. LTD., Singapore 179098 (SG)
(72) Inventor: Lin, Tao, 179098 Singapore (SG); Fan, Yihui, 179098 Singapore (SG)
(74) Representative: Patentanwälte Magenbauer & Kollegen Partnerschaft mbB

(57) **Abstract**

Embodiments of this disclosure relate to field of safety technologies, and provide a method for verifying access permission, an integrated circuit system, and an electronic device. The integrated circuit system includes at least a processor and a verification circuit, the verification circuit being coupled between the processor and a peripheral, the method being applied to the integrated circuit system, and including: in response to that a to-be-verified application requests to access the peripheral through the processor, generating, by the processor, a target access request including processor identity information, and sending the target access request to the peripheral, wherein the processor identity information is configured for calling the processor to access the peripheral by the to-be-verified application; and intercepting, by the verification circuit, the target access request, and performing access permission verification on the to-be-verified application based on the processor identity information included in the target access request.

## Description

### FIELD OF THE INVENTION

This disclosure relates to field of safety technologies, and more particularly, to a method for verifying access permission, an integrated circuit system, and an electronic device.

### BACKGROUND OF THE INVENTION

In fields such as automobiles, industrial control, etc., a plurality of applications may be run by an integrated circuit system. In this case, if all the applications have highest permission to a peripheral connected to the integrated circuit system, safety and reliability of the peripheral may be reduced. Therefore, to guarantee the safety of the peripheral, it is to restrict access permission of the applications for accessing an address space to which the peripheral is mapped in an address space corresponding to a processor.

### SUMMARY OF THE INVENTION

Currently, access permission control is commonly implemented using a conventional isolation method based on a hardware memory protection unit (MPU)/memory management unit (MMU). However, the method is limited in terms of isolation granularity, the number of isolation regions, and time consumption in configuration switch.

To solve said technical problem, embodiments of this disclosure provide a method for verifying access permission, an integrated circuit system, and an electronic device, capable of solving the problem that there are said limitations to a conventional isolation method based on an MPU/MMU in actual application.

A first aspect of this disclosure provides a method for verifying access permission, applying to an integrated circuit system, the integrated circuit system including at least a processor and a verification circuit, the verification circuit being coupled between the processor and a peripheral, the method including: in response to that a to-be-verified application requests to access the peripheral through the processor, generating, by the processor, a target access request including processor identity information, and sending the target access request to the peripheral, wherein the processor identity information is configured for calling the processor to access the peripheral by the to-be-verified application; and intercepting, by the verification circuit, the target access request, and performing access permission verification on the to-be-verified application based on the processor identity information included in the target access request.

A second aspect of this disclosure provides an integrated circuit system, the system including: a processor and a verification circuit, the verification circuit being coupled between the processor and a peripheral, wherein the processor is configured for, in response to that a to-be-verified application requests to access the peripheral through the processor, generating a target access request including processor identity information, and sending the target access request to the peripheral, wherein the processor identity information is configured for calling the processor to access the peripheral by the to-be-verified application; and the verification circuit is configured for intercepting the target access request, and performing access permission verification on the to-be-verified application based on the processor identity information included in the target access request.

According to a third aspect of this disclosure, embodiments of this disclosure provide a computer-readable storage medium. The storage medium stores a computer program, and the computer program is configured for implementing the method for verifying access permission according to the first aspect.

According to a fourth aspect of this disclosure, embodiments of this disclosure provide an electronic device, the electronic device including: a processor; and a memory configured for storing processor-executable instructions, wherein the processor is configured for reading the executable instructions from the memory, and executing the executable instructions, to implement the method for verifying access permission according to the first aspect.

The method for verifying access permission according to this disclosure enables to set a verification circuit between the processor and a peripheral, thus, when a to-be-verified application requests to access the peripheral through the processor, the processor may send a target access request including processor identity information to the peripheral. The processor identity information is obtained based on an identity of the processor and a permission level of the to-be-verified application. Thus, after intercepting the target access request sent by the processor to the peripheral, based on the processor identity information included in the target access request, the verification circuit may be informed of the processor sending the target access request, as well as the permission level of the to-be-verified application that requests to access the peripheral, and further determine whether the processor is trusted and whether the to-be-verified application has permission to access the peripheral. If the verification circuit determines that the processor sending the target access request is trustworthy, and that the permission level of the to-be-verified application that requests to access the peripheral is qualified as well, it is confirmed that the application is successfully verified, in which case, the to-be-verified application may access the peripheral through the processor. Thus, it is enabled that address space isolation is performed without being based on an MPU/MMU, which therefore solves the problem that a conventional isolation method based on the MPU/MMU is limited in terms of isolation granularity, the number of isolation regions, and time consumption in configuration switch.

### BRIEF DESCRIPTION OF THE DRAWINGS

By describing embodiments of this disclosure in more detail in combination with the drawings, said and other purposes, characteristics, and vantages of this disclosure will become clearer. The drawings are for providing further understanding of embodiments of this disclosure, and constitute a part of the specification, which is used together with embodiments of this disclosure to explain this disclosure, and constitutes no limitation to this disclosure. In the drawings, identical reference signs generally represent identical components or steps.
FIG. 1 is a block diagram of a structure of an integrated circuit system according to an illustrative embodiment of this disclosure;
FIG. 2 is a block diagram of a structure of an integrated circuit system according to an illustrative embodiment of this disclosure;
FIG. 3 is a flowchart of a method for verifying access permission according to an illustrative embodiment of this disclosure;
FIG. 4 is a flowchart of a method for verifying access permission according to another illustrative embodiment of this disclosure;
FIG. 5 is a diagram of two-stage access permission verification according to an illustrative embodiment of this disclosure;
FIG. 6 is a flowchart of a method for verifying access permission according to still another illustrative embodiment of this disclosure;
FIG. 7 is a flowchart of a method for verifying access permission according to a fourth illustrative embodiment of this disclosure;
FIG. 8 is a flowchart of a method for verifying access permission according to a fifth illustrative embodiment of this disclosure;
FIG. 9 is a flowchart of a method for verifying access permission according to a sixth illustrative embodiment of this disclosure;
FIG. 10 is a flowchart of a method for verifying access permission according to a seventh illustrative embodiment of this disclosure;
FIG. 11 is a diagram of a structure of an apparatus for verifying access permission according to an illustrative embodiment of this disclosure; and
FIG. 12 is a diagram of a structure of an electronic device according to an illustrative embodiment of this disclosure.

### DETAILED DESCRIPTION OF THE EMBODIMENTS

Illustrative embodiments of this disclosure are described below in detail with reference to accompanying drawings. Obviously, the embodiments described are merely some, rather than all of embodiments of this disclosure. It should be understood that this disclosure is not limited by the illustrative embodiments described herein.

It should be noted that unless otherwise specified, the scope of this disclosure is not limited to relative arrangements, numeric expressions, and numerical values of components and steps described in these embodiments.

### Application overview

In fields such as automobiles, industrial control, etc., a plurality of applications may be run by an integrated circuit system. In this case, if all the applications have highest permission to a peripheral connected to the integrated circuit system, safety and reliability of the peripheral may be reduced. For example, in an autonomous driving system, if an application responsible for environment perception has highest permission to a brake mechanism, when having an anomaly or being maliciously attacked, the application may send an erroneous instruction or data to the brake mechanism, causing sudden braking of a driving vehicle or failure of the brake mechanism. Therefore, to guarantee the safety of the peripheral, it is to restrict access permission of the applications for accessing an address space to which the peripheral is mapped in an address space corresponding to a processor.

In view of this problem, in a system architecture such as an AUTOSAR classic platform (AUTOSAR CP), currently, access permission control is commonly implemented using a conventional isolation method based on a hardware memory protection unit (MPU)/memory management unit (MMU). Specifically with the method, the address space corresponding to the processor is divided into a plurality of independent spatial address regions, and different applications are allowed to access only address spaces within the applications' permission by switching a configuration parameter, such as an allowed range of addresses, an allowed access permission (such as reading/writing/execution), of the MPU or the MMU. The address space corresponding to the processor refers to a set of all memory addresses that may be addressed by the processor through instructions.

However, there are some limitations to the method in actual application. For example, minimum isolation regions supported by the MPU and the MMU are generally large, causing isolation to be too coarse-grained for fine-grained isolation. As another example, a number of isolation regions supported by the MPU and the MMU is limited, and if the number is less than that of peripherals, it is impossible to allocate an independent isolation region for each peripheral, which therefore is not applicable to a complex system architecture. As still another example, to modify a range, a number, permission, etc., in relation to the isolation regions, it is to switch the configuration parameter of the MPU or the MMU, causing time consumption, which therefore is not applicable to a scene of application requiring good real-time performance. In addition, the MPU and the MMU are to meet an address alignment requirement when performing address space isolation. For example, a start address of an isolation region is to meet an alignment rule. If an access address to which a peripheral is mapped does not meet the alignment rule, it is impossible to set the access address directly as an isolation region.

An embodiment of this disclosure proposes a novel solution, capable of solving the problem that there are said limitations to a conventional isolation method based on an MPU/MMU in actual application. Specifically, an embodiment of this disclosure provides a method for verifying access permission, which enables to set a verification circuit between a processor and a peripheral, thus, when a to-be-verified application requests to access the peripheral through the processor, the processor may send a target access request including processor identity information to the peripheral. The processor identity information is obtained based on an identity of the processor and a permission level of the to-be-verified application. Thus, the verification circuit intercepts the target access request sent by the processor to the peripheral, and based on the processor identity information included in the target access request, may be informed of the processor sending the target access request, as well as the permission level of the to-be-verified application that requests to access the peripheral. If the verification circuit determines that the processor sending the target access request is trustworthy, and that the permission level of the to-be-verified application that requests to access the peripheral is qualified as well, it is confirmed that the application is successfully verified, in which case, the to-be-verified application may access the peripheral through the processor.

### Illustrative system

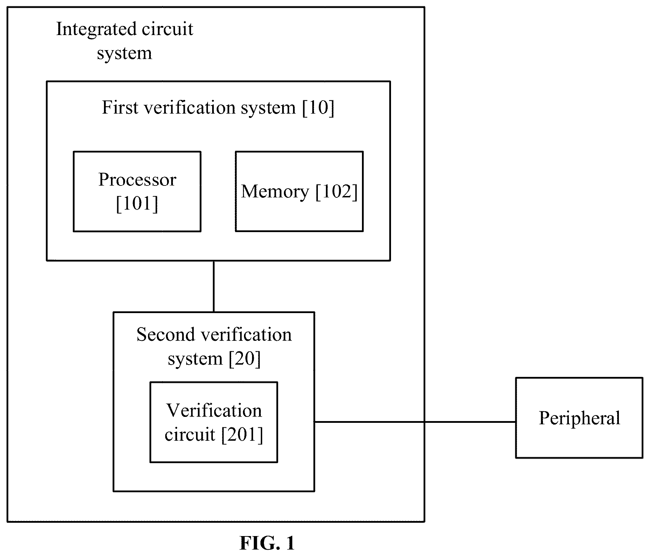

FIG. 1 is a block diagram of a structure of an integrated circuit system according to an illustrative embodiment of this disclosure.

As shown in FIG. 1, in an embodiment, an integrated circuit system may include a first verification system 10 and a second verification system 20. The first verification system 10 performs data transmission with the second verification system 20, and the second verification system 20 performs data transmission with a peripheral.

The first verification system 10 may include a processor 101, which may be specifically a single-core processor or a multi-core processor. The processor 101 may include a general-purpose processor such as a central processing unit (CPU), a graphics processing unit (GPU), etc.; may include an acceleration computing unit designed for a deep learning task or an autonomous driving task, such as a neural network processor (neural processing unit, NPU), etc.; and may also be a dedicated processor, such as an application specific integrated circuit ASIC, a field programmable gate array FPGA, etc.

The first verification system 10 may further include a memory 102, wherein the memory may include a volatile memory, such as a dynamic random access memory (DRAM), a static random access memory (SRAM), etc.; and may further include a non-volatile memory (NVM), such as a read-only memory (ROM), a flash memory, etc.

In the first verification system 10, the memory 102 may be configured for storing data, such as candidate identity information of the processor 101, a permission level of a to-be-verified application, etc. The memory 102 may also be configured for storing processor-executable computer program instructions. The processor 101 may load and execute the program instructions in the memory, to implement the method for verifying access permission. For example, when the to-be-verified application requests to access the peripheral through the processor, the processor 101 may generate target request information including processor identity information, and send the target request information to the peripheral.

The second verification system 20 includes a verification circuit 201. The second verification system 20 may be an independent hardware module, which may include a programmable logic device, etc. The second verification system 20 may be set between the first verification system 10 and the peripheral, for intercepting a target access request sent by the first verification system 10, and performing access permission verification. During the access permission verification, the second verification system 20 may determine whether a processor sending the target access request is trustworthy, and whether a permission level of a to-be-verified application that requests to access the peripheral meets a preset requirement.

In some implementations, the second verification system 20 is set between the processor 101 and a peripheral. For example, the verification circuit may be coupled to the peripheral, and may be connected to the processor 101 in the first verification system 10 through a specific interface circuit, thereby intercepting a target access request sent by the processor to the peripheral.

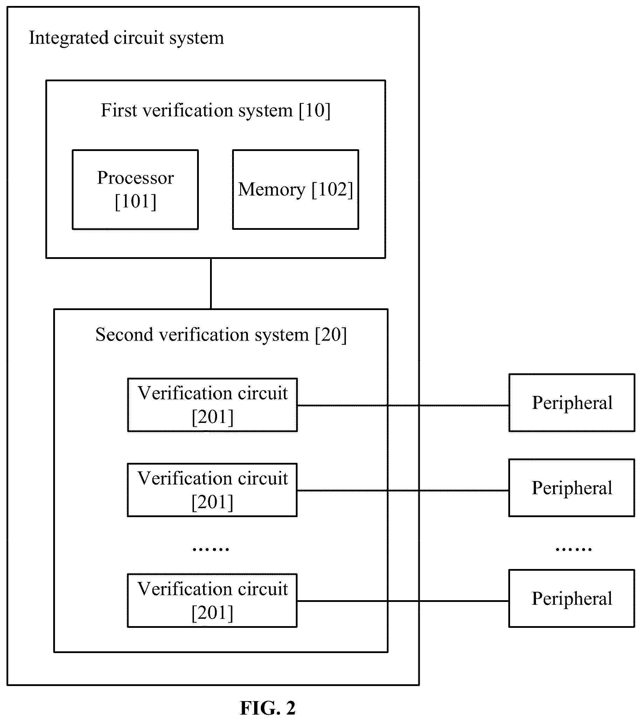

FIG. 2 is a block diagram of a structure of an integrated circuit system according to an illustrative embodiment of this disclosure.

As shown in FIG. 2, in some implementations, each second verification system 20 includes a plurality of verification circuits 201, wherein each verification circuit 201 is set between the first verification system 10 and one peripheral. Thus, each verification circuit 201 may intercept a target access request sent to the corresponding peripheral, thereby assuring safety of the corresponding peripheral.

### Illustrative method

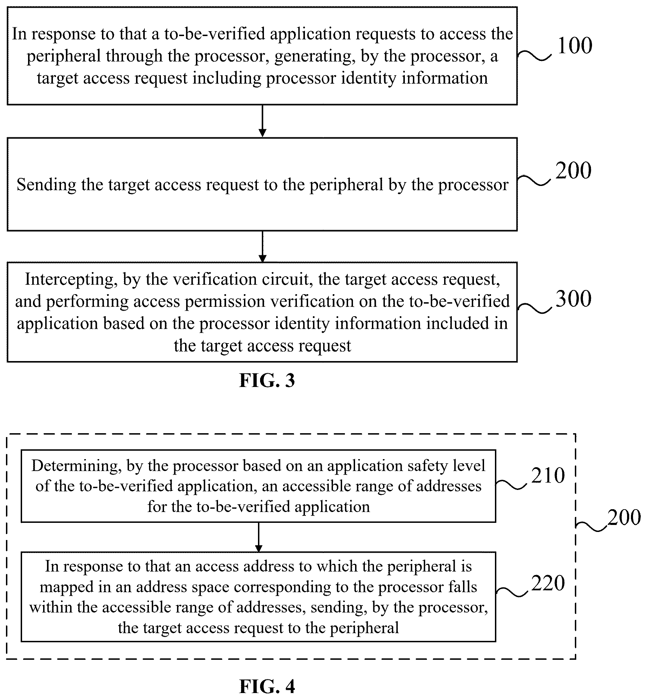

FIG. 3 is a flowchart of a method for verifying access permission according to an illustrative embodiment of this disclosure. This embodiment is applicable to a foregoing integrated circuit system. As shown in FIG. 3, the method includes steps as follows.

Step 100, In response to that a to-be-verified application requests to access the peripheral through the processor, generating, by the processor, a target access request including processor identity information

In step 100, the to-be-verified application may access the peripheral by calling the processor. Specifically, to access the peripheral, the to-be-verified application may initiate a request to the processor. Thus, in response to the request, the processor may generate the target access request to be sent to the peripheral. Given that another processor not trusted may send an access request to a peripheral, whereas it is impossible for some peripherals to take the initiative to tell an identity of the processor, the processor may include the processor identity information in the target access request. Thus, the processor identity information is configured for calling the processor to access the peripheral by the to-be-verified application, guaranteeing that a to-be-verified application may access a peripheral only through a trusted processor, thereby increasing safety of the peripheral.

In some implementations, the processor identity information may indicate not only the identity of the processor, but also permission information of the to-be-verified application. Thus, the verification circuit intercepts the target access request sent by the processor to the peripheral, and based on the processor identity information included in the target access request, may identify the processor sending the target access request, and determine the permission information of the to-be-verified application that requests to access the peripheral.

In some implementations, the processor may be a multi-core processor. In this case, each core may have different processor identity information, and processor identity information included in a target access request generated by each core corresponds to that core. Thus, a processor core sending a target access request may be identified based on the target access request.

Step 200, Sending the target access request to the peripheral by the processor

In step 200, after generating the target access request, the processor sends the target access request to the peripheral that the to-be-verified application requests to access, requesting to access the peripheral.

Step 300, Intercepting, by the verification circuit, the target access request, and performing access permission verification on the to-be-verified application based on the processor identity information included in the target access request

In step 300, after the processor has sent the target access request to the peripheral, the verification circuit set between the processor and the peripheral may intercept the target access request. Subsequently, the verification circuit may perform access permission verification on the to-be-verified application based on the processor identity information included in the target access request. For example, the verification circuit may determine, based on the processor identity information, whether the processor sending the target access request is a trusted processor, and if it is not a trusted processor, it is considered that the application fails the permission verification. In addition, if the processor identity information further indicates the permission information of the to-be-verified application, the verification circuit may compare the permission information with permission required by the peripheral, wherein if the two do not match, it is considered that the application fails the permission verification.

After the permission verification is completed, if the application passes the permission verification, the target access request may be allowed to pass, and the to-be-verified application may access the peripheral through the processor, otherwise if the verification of the application fails, the to-be-verified application is prohibited from accessing the peripheral through the processor.

It may be known, from the above technical solution, that the method according to embodiments of this disclosure enables to set a verification circuit between the processor and a peripheral, thus, when a to-be-verified application requests to access the peripheral through the processor, the processor may send a target access request including processor identity information to the peripheral. The processor identity information is obtained based on an identity of the processor and a permission level of the to-be-verified application. Thus, after intercepting the target access request sent by the processor to the peripheral, based on the processor identity information included in the target access request, the verification circuit may be informed of the processor sending the target access request, as well as the permission level of the to-be-verified application that requests to access the peripheral, and further perform verification on both trustworthiness of the processor and the permission level of the to-be-verified application. If the verification circuit determines that the processor sending the target access request is trustworthy, and that the permission level of the to-be-verified application that requests to access the peripheral is qualified as well, it is confirmed that the application is successfully verified, in which case, the to-be-verified application may access the peripheral through the processor. Thus, it is enabled that address space isolation is performed without being based on an MPU/MMU, which therefore solves the problem that a conventional isolation method based on the MPU/MMU is limited in terms of isolation granularity, the number of isolation regions, and time consumption in configuration switch.

FIG. 4 is a flowchart of a method for verifying access permission according to another illustrative embodiment of this disclosure. As shown in FIG. 4, based on said embodiment shown in FIG. 3, step 200 may include steps as follows.

Step 210, Determining, by the processor based on an application safety level of the to-be-verified application, an accessible range of addresses for the to-be-verified application

In step 210, an address space corresponding to the processor may be pre-divided into a number of isolation regions with different access permissions using an MPU or MMU. Thus, the processor may determine, based on the application safety level of the to-be-verified application, whether the to-be-verified application has permission to access the isolation regions, and then determine the accessible range of addresses for the to-be-verified application based on an isolation region the to-be-verified application has permission to access.

Illustratively, the address space corresponding to the processor may be divided into isolation regions S1 and S2, wherein access permission to isolation region S1 includes allowing access by an application of a high safety level, and access permission to isolation region S2 includes allowing access by an application of a high safety level and an application of a low safety level.

Thus, if the application safety level of the to-be-verified application is high, it may be determined that the accessible range of addresses for the to-be-verified application includes both isolation region S1 and isolation region S2. If the application safety level of the to-be-verified application is low, it may be determined that the accessible range of addresses for the to-be-verified application includes isolation region S2 only, but not isolation region S1.

Step 220, In response to that an access address to which the peripheral is mapped in an address space corresponding to the processor falls within the accessible range of addresses, sending, by the processor, the target access request to the peripheral

In step 220, to improve permission verification efficiency, thereby reducing access delay, the processor may first perform coarse-grained primary verification of permission based on the accessible range of addresses. Specifically, each peripheral is mapped to an access address in the address space corresponding to the processor, the access address being a preset address or range of addresses, wherein the range of addresses may include consecutive addresses and/or nonconsecutive addresses. During the primary verification of permission, the processor determines whether the access address to which the peripheral is mapped falls within the accessible range of addresses for the to-be-verified application. If the access address falls within the accessible range of addresses for the to-be-verified application, it is considered that the to-be-verified application may access the access address. Therefore, it is determined that the application passes the primary verification of permission.

Illustratively, if the accessible range of addresses for the to-be-verified application includes isolation region S2, and the access address to which the peripheral is mapped in the address space corresponding to the processor falls within isolation region S2, it is determined that the application passes the primary verification of permission.

Thus, the target access request is sent to the peripheral when the application passes the primary verification, so as to perform fine-grained secondary permission verification based on the target access request. However, if the application fails the primary verification, the target access request is not sent to the peripheral, reducing an amount of operations at the peripheral.

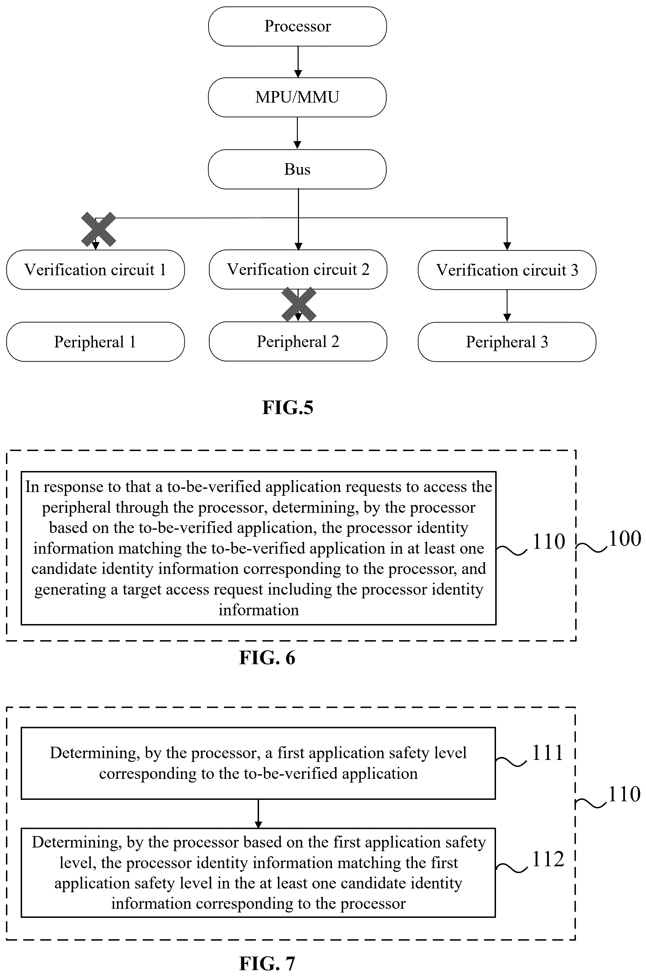

FIG. 5 is a diagram of two-stage access permission verification according to an illustrative embodiment of this disclosure.

As shown in FIG. 5, in response to that the to-be-verified application requests to access peripheral 1 through the processor, coarse-grained primary verification is first performed by the MPU/MMU in the processor. If the MPU/MMU determines that the access address to which the peripheral is mapped is not within the accessible range of addresses for the to-be-verified application, it is considered that the application fails the primary verification. In this case, no secondary verification is performed, and therefore the target access request is not sent to peripheral 1.

In response to that the to-be-verified application requests to access peripheral 2 through the processor, coarse-grained primary verification is first performed by the MPU/MMU in the processor. If the application passes the primary verification, the processor may generate the target access request including the processor identity information, and transmit the request to peripheral 2 through the bus. Verification circuit 2 connected to peripheral 2 intercepts the target access request, and performs fine-grained secondary verification. If the verification circuit determines, based on the processor identity information, that the identity of the processor is not trusted, or the to-be-verified application does not have enough access permission, it is considered that the application fails the secondary verification. In this case, the target access request is not allowed to pass, and it is impossible to transmit the target access request to peripheral 2.

In response to that the to-be-verified application requests to access peripheral 3 through the processor, coarse-grained primary verification is first performed by the MPU/MMU in the processor. If the application passes the primary verification, the processor may generate the target access request including the processor identity information, and transmit the request to peripheral 3 through the bus. Verification circuit 3 connected to peripheral 3 intercepts the target access request, and performs fine-grained secondary verification. If the application passes the secondary verification, the target access request is allowed to pass, and the target access request may be transmitted to peripheral 3.

It may be known, from the above technical solution, that the method according to embodiments of this disclosure enables two-stage hierarchical verification by the MPU/MMU and the verification circuit. At the stage of primary verification of permission, the MPU/MMU may filter out part of to-be-verified applications clearly having no permission, and the target access request is sent only when the access address to which the peripheral is mapped falls within the accessible range, which then triggers a subsequent secondary verification process. Thus, an amount of operations by the verification circuit is enabled to be reduced, reducing workload of the verification circuit while improving the verification efficiency. At the stage of secondary verification, complex fine-grained verification is implemented using the verification circuit. Thus, shortcomings of the MPU/MMU in fine-grained permission verification are compensated for using the verification circuit. Therefore, the MPU/MMU may perform division to obtain just a few coarse-grained isolation regions, without having to perform division to obtain a lot of fine-grained isolation regions or to implement fine-grained verification by frequent configuration switch.

FIG. 6 is a flowchart of a method for verifying access permission according to still another illustrative embodiment of this disclosure. As shown in FIG. 6, based on said embodiment shown in FIG. 3, step 100 may include a step as follows.

Step 110, In response to that a to-be-verified application requests to access the peripheral through the processor, determining, by the processor based on the to-be-verified application, the processor identity information matching the to-be-verified application in at least one candidate identity information corresponding to the processor, and generating a target access request including the processor identity information

In step 110, in response to that the to-be-verified application requests to access the peripheral through the processor, before generating the target access request, the processor first determines the processor identity information based on an application type, a function, etc., of the to-be-verified application. Specifically, each processor corresponds to at least one candidate identity information, and different candidate identity information may match different access permissions. For example, processor C1 may correspond to a pool of candidate identities, which includes three candidate identity information, i.e., mid11, mid12, and mid13, wherein mid11 matches read/write permission corresponding to an engine control unit, mid12 matches read-only permission corresponding to the engine control unit, and mid13 matches read/write permission to an onboard audio/video control module. Thus, if the to-be-verified application is a music player app, processor identity information matching the music player app in mid11 to mid13, such as mid13 having the read/write permission to the onboard audio/video control module, may be determined based on the application type, the function, etc.

In some examples, in addition to the application type and the function, the processor identity information matching the to-be-verified application may also be determined based on a current scene of application of the to-be-verified application. Specifically, the processor identity information matching the to-be-verified application may be selected from the candidate identity information of the processor based on a task being executed by the to-be-verified application, in combination with the application type and the function. For example, if the to-be-verified application involves safety control for a vehicle, in a scene that the vehicle drives normally, the application may execute a vehicle driving state monitoring task, in which case, processor identity information matching a low access permission may be selected, such that the to-be-verified application may read some parameters of the peripheral, such as to obtain a vehicle speed, an engine speed, etc. Moreover, in a scene such as a vehicle collision warning or entering an emergency braking state, this application may execute a safety control task, in which case, processor identity information matching high access permission may be selected, such that the to-be-verified application may write some parameters of the peripheral, such as to control airbag deployment, etc. Thus, when executing different tasks, the to-be-verified application may be matched to different processor identity information, and then granted different access permissions to the different tasks, which facilitates further improving fineness of access permission control, meeting safety needs in different scenes.

In some examples, if the processor is a multi-core processor, the cores may correspond respectively to at least one candidate identity information. Different candidate identity information corresponding to a same core may match different access permissions. Candidate identity information corresponding to different cores may match the same access permission, or may match different access permissions. For example, processor C2 has two cores, wherein a first core may correspond to two candidate identity information mid21 and mid22, and a second core may correspond to two candidate identity information mid23 and mid24. Thus, if the to-be-verified application is not bound to a particular core of processor C2, one of mid21 to mid24 may be determined to be the processor identity information. If the to-be-verified application is bound to a core of processor C2, such as the first core, one of mid21 and mid22 may be determined to be the processor identity information.

In some examples, in response to that the to-be-verified application requests to access the peripheral through the processor, the processor may determine the processor identity information based on the to-be-verified application. In some other examples, the processor may also predetermine the processor identity information before the to-be-verified application requests to access the peripheral through the processor. For example, the processor may predetermine the processor identity information based on an application (referred to as an initial application hereinafter). Thus, in response to that the to-be-verified application requests to access the peripheral through the processor, if the to-be-verified application is the initial application, the processor does not have to again determine the processor identity information based on the to-be-verified application, but may directly generate the target access request based on the predetermined processor identity information, which therefore enables to reduce delay caused by determining the processor identity information, which facilitates improving permission verification efficiency.

It may be known, from the above technical solution, that the method according to embodiments of this disclosure enables to select matching processor identity information in a plurality of candidate identity information of the processor based on the to-be-verified application. Thus, the processor identity information may be associated with not only the processor, but also the to-be-verified application. Therefore, the verification circuit may verify both the processor and the to-be-verified application by analyzing the processor identity information, and then determine whether the to-be-verified application is allowed to access the peripheral through the processor. On this basis, the target access request may include different processor identity information for different to-be-verified applications or when the same to-be-verified application executes different tasks. Compared to division into static isolation regions by the MPU/MMU, access permission control according to embodiments of this disclosure is more flexible, which facilitates improving range of application of permission verification and verification efficiency.

FIG. 7 is a flowchart of a method for verifying access permission according to a fourth illustrative embodiment of this disclosure. As shown in FIG. 7, based on said embodiment shown in FIG. 6, the determining, by the processor based on the to-be-verified application, the processor identity information matching the to-be-verified application in at least one candidate identity information corresponding to the processor in step 110 may include steps as follows.

Step 111, Determining, by the processor, a first application safety level corresponding to the to-be-verified application

In step 111, the processor determines the first application safety level corresponding to the to-be-verified application based on the type, the function, and a scene of use of the to-be-verified application. For example, in the field of intelligent driving, for an application involving safety control for a vehicle, such as a brake control application, a steering control application, etc., it may be determined that a first application safety level corresponding to the application is a high application safety level; whereas for an application that is not related to vehicle control, such as a music player app, a video player app, etc., it may be determined that a first application safety level corresponding to the application is a low application safety level.

Step 112, Determining, by the processor based on the first application safety level, the processor identity information matching the first application safety level in the at least one candidate identity information corresponding to the processor

In step 112, after determining the first application safety level corresponding to the to-be-verified application, the processor may determine the processor identity information based on the first application safety level. Specifically, the processor corresponds to a number of candidate identity information, wherein different candidate identity information may correspond to different safety levels. For example, processor C3 may correspond to two candidate identity information mid31 and mid32, wherein mid31 matches a high safety level, and mid32 matches a low safety level. Thus, if the first application safety level corresponding to the to-be-verified application is a low application safety level, in the mid31 and the mid32, the mid32 may be determined to be the processor identity information.

Of course, in embodiment of steps 111-112 of this disclosure, only two application safety levels, i.e., a high application safety level and a low application safety level, are set. In some other embodiments, more application safety levels may be set as needed, which is not limited in this disclosure.

It may be known, from the above technical solution, that the method according to embodiments of this disclosure enables to determine the first application safety level corresponding to the to-be-verified application, and select the matching processor identity information in the candidate identity information of the processor based on the first application safety level. Thus, the application safety level is associated with the processor identity information, and when requesting to access the peripheral through the processor, applications of different application safety levels may be matched to processor identity information matching different access permissions, wherein for example, an application of a high safety level may be matched with processor identity information matching high access permission, and an application of a low safety level may be matched with processor identity information matching low access permission. Therefore, the verification circuit may quickly infer the safety level and an allowed permission range of the to-be-verified application based on the processor identity information, and then determine whether the to-be-verified application has permission to access the peripheral. Thus, it facilitates simplifying a permission verification process, while guaranteeing accuracy of a verification result.

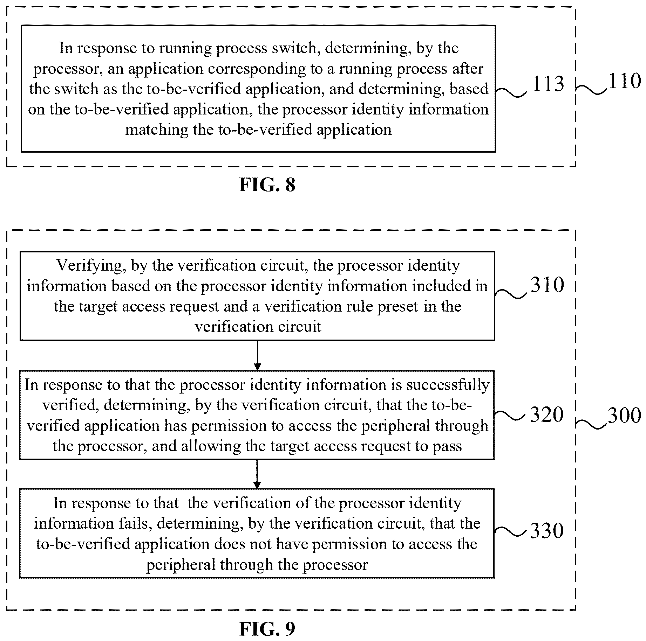

FIG. 8 is a flowchart of a method for verifying access permission according to a fifth illustrative embodiment of this disclosure. As shown in FIG. 8, based on said embodiment shown in FIG. 6, the determining, by the processor based on the to-be-verified application, the processor identity information matching the to-be-verified application in at least one candidate identity information corresponding to the processor in step 110 may include a step as follows.

Step 113, In response to running process switch, determining, by the processor, an application corresponding to a running process after the switch as the to-be-verified application, and determining, based on the to-be-verified application, the processor identity information matching the to-be-verified application

In step 113, before the to-be-verified application requests to access the peripheral through the processor, the processor may predetermine the processor identity information. Specifically, if detecting process switch, the processor may determine the processor identity information based on an application (referred to as a current application hereinafter) corresponding to a running process after the process switch. Thus, if no process switch is performed before the to-be-verified application requests to access the peripheral through the processor, the current application is the to-be-verified application. Then, when the to-be-verified application requests to access the peripheral through the processor, the processor may keep using the previously determined processor identity information, without having to again determine the processor identity information based on the to-be-verified application.

The processor identity information may be determined through steps 111-112 as described.

It may be known, from the above technical solution, that the method according to embodiments of this disclosure enables to trigger switch of the processor identity information upon process switch. Thus, it is ensured that the processor identity information matches the application corresponding to a running process no matter how process switches, and thereby, the verification circuit does not have to again determine the processor identity information when the to-be-verified application requests to access the peripheral. Therefore, embodiments of this disclosure enable to reduce delay caused by determining the processor identity information, which facilitates improving permission verification efficiency. Compared to a conventional isolation method based on an MPU/MMU, the method according to embodiments of this disclosure is more applicable to a scene of application requiring good real-time performance.

FIG. 9 is a flowchart of a method for verifying access permission according to a sixth illustrative embodiment of this disclosure. As shown in FIG. 9, based on said embodiment shown in FIG. 3, step 300 may include steps as follows.

Step 310, Verifying, by the verification circuit, the processor identity information based on the processor identity information included in the target access request and a verification rule preset in the verification circuit

In step 310, a verification rule matching the peripheral is set in the verification circuit, and may be preset specifically according to a type, a function, and a scene of application of the peripheral, and implemented through an embedded program. Thus, the verification circuit may parse the target access request to obtain the processor identity information, and determine whether the processor identity information conforms to the verification rule, thereby implementing verification of the processor identity information. If the processor identity information conforms to the verification rule, the verification circuit determines that the processor identity information is successfully verified; or otherwise if the identity information does not, the circuit determines that the verification of the processor identity information fails.

In some examples, the verification rule may include a plurality of sub-rules, such as a permission verification rule, a validity period verification rule, etc. If the processor identity information meets each sub-rule, it is considered that the processor identity information is successfully verified. For example, the verification circuit may first determine whether the processor identity information is within a validity period. If it is not within the validity period, it is considered that the processor identity information fails validity period verification, and therefore the verification of the processor identity information fails. If it is within the validity period, it is considered that the processor identity information passes validity period verification, and it is further determined whether permission matching the processor identity information meets permission required for the peripheral. If the permission required is met, it is considered that the permission passes verification, and therefore the processor identity information is successfully verified. If the permission required is not met, it is considered that the verification of the permission fails, and therefore the verification of the processor identity information fails.

Step 320, In response to that the processor identity information is successfully verified, determining, by the verification circuit, that the to-be-verified application has permission to access the peripheral through the processor, and allowing the target access request to pass

In step 320, if the processor identity information is successfully verified, it may be considered that the to-be-verified application has permission to access the peripheral through the processor. In this case, the verification circuit may allow the target access request to pass, and the target access request may continue to be transmitted to the peripheral, such that in response to the target access request, the peripheral performs a respective operation, or feeds respective data back to the to-be-verified application. For example, if the target access request is for requesting to read data of a sensor in the peripheral, the peripheral may feed real-time data of the sensor back to the to-be-verified application.

Step 330, In response to that the verification of the processor identity information fails, determining, by the verification circuit, that the to-be-verified application does not have permission to access the peripheral through the processor

In step 330, if the verification of the processor identity information fails, it may be considered that the to-be-verified application does not have permission to access the peripheral through the processor. In this case, the verification circuit does not allow the target access request to pass, to prevent the target access request from continuing to be transmitted to the peripheral. For example, if the target access request is for requesting to modify configuration of a parameter in the peripheral, and in case the verification of the processor identity information fails, the verification circuit does not allow the target access request to pass, to avoid illegal modification of the parameter of the peripheral, thereby guaranteeing safety and stability of the peripheral.

In an example, if the verification of the processor identity information fails, the verification circuit may further generate respective error reminder information, and feed the error reminder information back to the to-be-verified application, such that the to-be-verified application performs respective processing. For example, the to-be-verified application may prompt a user, and thus, the user may manually adjust permission for the to-be-verified application as needed.

It may be known, from the above technical solution, that the method according to embodiments of this disclosure enables to preset the verification rule matching the peripheral in the verification circuit, and verify the processor identity information based on the verification rule. Thus, just processor identity information that conforms to the verification rule may be successfully verified, which then allows the corresponding to-be-verified application to access the peripheral. Compared to a conventional isolation method based on an MPU/MMU, embodiments of this disclosure enables to flexibly adjust the verification rule without having to change a hardware structure of the verification circuit or adjust configuration of the MPU/MMU, which therefore improves flexibility of access permission verification.

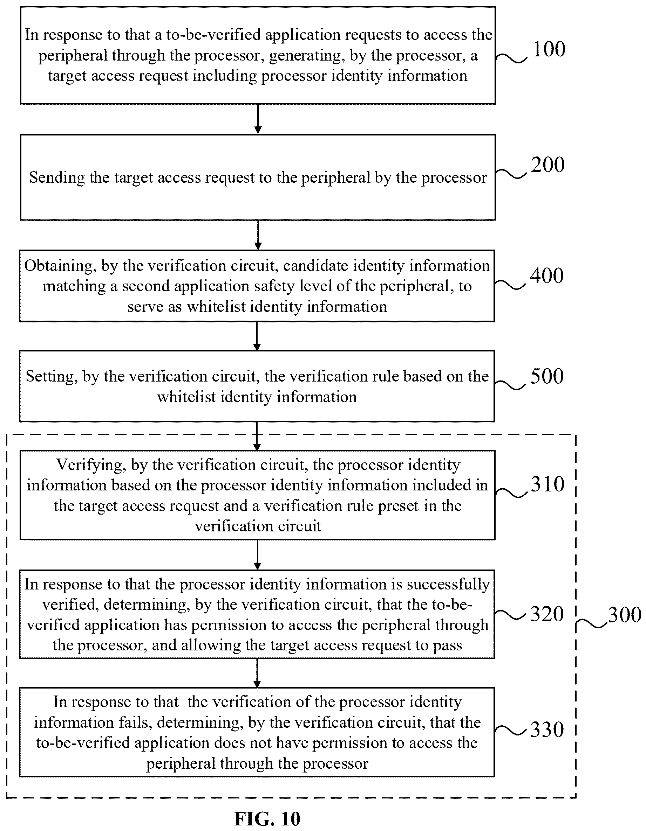

FIG. 10 is a flowchart of a method for verifying access permission according to a seventh illustrative embodiment of this disclosure. As shown in FIG. 10, based on said embodiment shown in FIG. 9, the method may include steps as follows, before step 310.

Step 400, Obtaining, by the verification circuit, candidate identity information matching a second application safety level of the peripheral, to serve as whitelist identity information

In step 400, the verification circuit may predetermine the whitelist identity information, and then determine the verification rule. Specifically, a respective safety level, which is referred to as the second application safety level, may be determined for the peripheral based on the type, the function, and a scene of use of the peripheral. Thus, the verification circuit may obtain the candidate identity information matching the second application safety level to serve as the whitelist identity information. The candidate identity information matching the second application safety level may be candidate identity information of a safety level that is not lower than the second application safety level. For example, a second application safety level of a peripheral relating to a vehicle control function, such as an engine control unit, may be set to be a high application safety level. Thus, the verification circuit may obtain candidate identity information matching the high safety level, such as mid11 and mid12, to serve as the whitelist identity information. A second application safety level of a peripheral unrelated to vehicle control, such as an onboard audio/video control module, is set to be a low safety level, and the verification circuit obtains candidate identity information matching the low safety level, such as mid11, mid12, and mid13, to serve as the whitelist identity information.

Step 500, Setting, by the verification circuit, the verification rule based on the whitelist identity information

In step 500, a whitelisted set or whitelist may be set based on the whitelist identity information. Thus, the verification rule may be set as: determining that the processor identity information is successfully verified merely when the processor identity information included in the target access request belongs to the whitelist identity information; and otherwise when the identity information included in the request does not belong to the whitelist, determining that the verification of the processor identity information fails. For example, a whitelisted set {mid11, mid12} is set based on the whitelist identity information. Thus, if the processor identity information included in the target access request is mid11, the identity information is successfully verified; and if it is mid13, the verification of the identity information fails.

It may be known, from the above technical solution, that the method according to embodiments of this disclosure enables to preset a whitelist for each peripheral, and determine a respective verification rule based on the whitelist. Thus, the verification circuit may simplify the permission verification as a whitelist query, to ensure that the to-be-verified application may access the respective peripheral through the processor merely when the processor identity information belongs to identity information allowed in the whitelist, further improving efficiency and accuracy of the permission verification.

### Illustrative apparatus

The method for verifying access permission according to embodiments of this disclosure is described above. It may be understood that to implement functions of the method for verifying access permission, an integrated circuit system may include respective hardware and software for implementing a hardware function.

A person skilled in the art should easily realize that, in combination with steps of the method for verifying access permission described in embodiments of this disclosure, embodiments of this disclosure may be implemented in form of hardware or a combination of software-driven hardware. Whether a certain function is implemented in form of hardware or software-driven hardware depends on specific application of the technical solution and a design constraint. A person skilled in the art may use different methods to implement a described function for each specific application, but such implementation should not be considered to be beyond the scope of this disclosure.

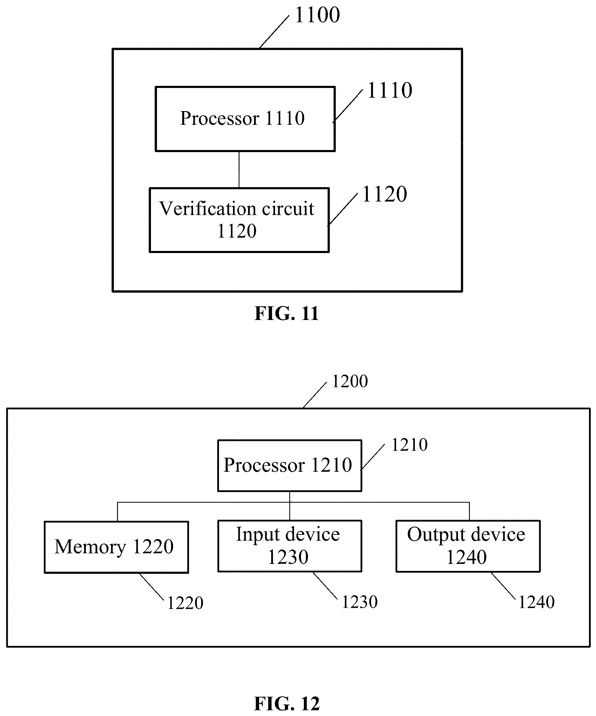

FIG. 11 is a diagram of a structure of an apparatus for verifying access permission according to an illustrative embodiment of this disclosure. As shown in FIG. 11, in an embodiment, the apparatus 1100 for verifying access permission includes one or more processors 1110 and a verification circuit 1120. The verification circuit 1120 is coupled between the processor 1110 and a peripheral.

The processor 1110 is configured to run instructions stored in memory for: in response to that a to-be-verified application requests to access the peripheral through the processor 1110, generating a target access request including processor 1110 identity information, and sending the target access request to the peripheral, wherein the processor 1110 identity information is configured for calling the processor 1110 to access the peripheral by the to-be-verified application.

The verification circuit 1120 is configured to run instructions stored in memory for: intercepting the target access request, and performing access permission verification on the to-be-verified application based on the processor 1110 identity information included in the target access request.

In an illustrative embodiment, the processor 1110 is configured to run instructions stored in memory for: determining, based on an application safety level of the to-be-verified application, an accessible range of addresses for the to-be-verified application; and in response to that an access address to which the peripheral is mapped in an address space corresponding to the processor 1110 falls within the accessible range of addresses, sending the target access request to the peripheral.

In an illustrative embodiment, the processor 1110 is configured to run instructions stored in memory for: determining, based on the to-be-verified application, the processor 1110 identity information matching the to-be-verified application in at least one candidate identity information corresponding to the processor 1110.

In an illustrative embodiment, the processor 1110 is configured to run instructions stored in memory for: determining a first application safety level corresponding to the to-be-verified application; and determining, based on the first application safety level, the processor 1110 identity information matching the first application safety level in the at least one candidate identity information corresponding to the processor 1110.

In an illustrative embodiment, the processor 1110 is configured to run instructions stored in memory for: in response to running process switch, determining an application corresponding to a running process after the switch as the to-be-verified application, and determining the processor 1110 identity information matching the to-be-verified application based on the to-be-verified application.

In an illustrative embodiment, the verification circuit 1120 is configured to run instructions stored in memory for: verifying the processor 1110 identity information based on the processor 1110 identity information included in the target access request and a verification rule preset in the verification circuit 1120; in response to that the processor 1110 identity information is successfully verified, determining that the to-be-verified application has permission to access the peripheral through the processor 1110, and allowing the target access request to pass; and in response to that the verification of the processor 1110 identity information fails, determining that the to-be-verified application does not have permission to access the peripheral through the processor 1110.

In an illustrative embodiment, the verification circuit 1120 is configured to run instructions stored in memory for: obtaining candidate identity information matching a second application safety level of the peripheral, to serve as whitelist identity information; and setting the verification rule based on the whitelist identity information.

### Illustrative electronic device

FIG. 12 is a diagram of a structure of an electronic device according to an illustrative embodiment of this disclosure. As shown in FIG. 12, the electronic device 1200 includes at least one processor 1210 and a memory 1220.

The processor 1210 may be a central processing unit (CPU) or another form of processing unit having a data processing capability and/or an instruction execution capability, and may control other components in the electronic device 1200 to implement desired functions.

The memory 1220 may include one or more computer program products, which may include various forms of computer-readable storage media, such as a volatile memory and/or a non-volatile memory. The volatile memory may include, for example, a random access memory (RAM) and/or a cache. The nonvolatile memory may include, for example, a read-only memory (ROM), a hard disk, a flash memory, etc. One or more computer program instructions may be stored on a computer-readable storage medium. The processor 1210 may execute the one or more program instructions, to implement the method according to various embodiments of this disclosure described above and/or other desired functions.

In an example, the electronic device 1200 may further include an input device 1230 and an output device 1240. These components are connected to each other through a bus system and/or another form of connection mechanism (not shown).

The input device 1230 may further include, for example, a keyboard, a mouse, etc.

The output device 1240 may output various information to the outside, and may include, for example, a display, a speaker, a printer, a communication network, a remote output device connected to the communication network, etc.

Of course, for simplicity, FIG. 12 shows just some of components in the electronic device 1200 that are related to this disclosure, and components such as a bus, an input/output interface, etc., are omitted. In addition, according to specific application situations, the electronic device 1200 may further include any other appropriate components.

### Illustrative computer program product and computer-readable storage medium

In addition to said method and device, embodiments of this disclosure may also be of a computer program product, which includes computer program instructions. When run by a processor, the computer program instructions enable the processor to perform the steps, of the method according to embodiments of this disclosure, that are described in the "Illustrative method" section of this specification.

The computer program product may be a program code, written in one programming language or any combination of a plurality of programming languages, for performing the operations in embodiments of this disclosure. Such a programming language includes an object-oriented programming language, such as Java, C++, etc., and further includes a conventional procedural programming language, such as a "C" language or a similar programming language. The program code may be executed entirely or partially on a user computing device, executed as an independent software package, executed partially on the user computing device and partially on a remote computing device, or entirely on the remote computing device or a server.

In addition, embodiments of this disclosure may further be of a computer-readable storage medium, which stores computer program instructions. When run by a processor, the computer program instructions enable the processor to perform the steps, of the method according to embodiments of this disclosure, that are described in the "Illustrative method" section of this specification.

The computer-readable storage medium may be one readable medium or any combination of a plurality of readable media. The readable medium may be a readable signal medium or a readable storage medium. The readable storage medium may include, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection having one or more conducting wires, a portable disk, a hard disk, a random access memory (RAM), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, note that advantages, superiorities, effects, etc., mentioned in this disclosure are merely examples but are not for limitation, and it cannot be considered that these advantages, superiorities, effects, etc., are necessary for each embodiment of this disclosure. Specific details described above are merely for examples and for ease of understanding, rather than limitations. The details described above do not limit that this disclosure must be implemented by using the foregoing specific details.

The block diagram of the equipment, the apparatus, the device, and the system involved in this disclosure are merely illustrative examples and are not intended to require or imply that the equipment, the apparatus, the device, and the system must be connected, arranged, and configured in the manners shown in the block diagrams. As a person skilled in the art will realize, the equipment, the apparatus, the device, and the system may be connected, arranged, and configured in an arbitrary manner. Terms such as "include/comprise", "contain", "have", etc., are open terms meaning, and may be used interchangeably with, "including but not limited to". Terms "or" and "and" used herein refer to, and may be used interchangeably with, "and/or", unless the context clearly indicates otherwise. A term "such as" used herein refers to, and may be used interchangeably with, "such as but not limited to".

Further note that components or steps in the apparatus, device, and method of this disclosure may be divided and / or recombined. The division and / or recombination should be deemed as equivalent solutions of this disclosure.

The above description of the disclosed aspects is provided, to allow any person skilled in the art to carry out or use this disclosure. Various modifications to these aspects are quite obvious to a person skilled in the art, and a general principle defined herein is applicable to other aspects without departing from the scope of this disclosure. Therefore, this disclosure is not intended to be limited to the aspects illustrated herein, but is of the widest scope consistent with the principle and new features disclosed herein.

The above description is given for illustration and description. In addition, the description is not intended to limit embodiments of this disclosure to forms disclosed herein. Although a plurality of illustrative aspects and embodiments have been discussed above, a person skilled in the art may recognize certain variations, modifications, changes, additions, and sub-combinations thereof.

## Claims

1. A method for verifying access permission, the method applying to an integrated circuit system (1100), the integrated circuit system (1100) including at least a processor (101, 1110) and a verification circuit (201, 1120, 1-3), the verification circuit (201, 1120, 1-3) being coupled between the processor (101, 1110) and a peripheral (1-3), the method including:
in response to that a to-be-verified application requests to access the peripheral (1-3) through the processor (101, 1110), generating (100), by the processor (101, 1110), a target access request including processor identity information, and sending (200) the target access request to the peripheral (1-3), wherein the processor identity information is configured for calling the processor (101, 1110) to access the peripheral (1-3) by the to-be-verified application; and
intercepting (300), by the verification circuit (201, 1120, 1-3), the target access request, and performing access permission verification on the to-be-verified application based on the processor identity information included in the target access request.

2. The method for verifying access permission according to claim 1, wherein the sending the target access request to the peripheral (1-3) includes:
determining (210), by the processor (101, 1110) based on an application safety level of the to-be-verified application, an accessible range of addresses for the to-be-verified application; and
in response to that an access address to which the peripheral (1-3) is mapped in an address space corresponding to the processor (101, 1110) falls within the accessible range of addresses, sending (220), by the processor (101, 1110), the target access request to the peripheral (1-3).

3. The method for verifying access permission according to claim 1 or 2, including: before the generating, by the processor (101, 1110), a target access request including processor identity information,
determining (110), by the processor (101, 1110) based on the to-be-verified application, the processor identity information matching the to-be-verified application in at least one candidate identity information corresponding to the processor (101, 1110).

4. The method for verifying access permission according to claim 3, wherein the determining, by the processor (101, 1110) based on the to-be-verified application, the processor identity information matching the to-be-verified application in at least one candidate identity information corresponding to the processor (101, 1110) includes:
determining (111), by the processor (101, 1110), a first application safety level corresponding to the to-be-verified application; and
determining (112), by the processor (101, 1110) based on the first application safety level, the processor identity information matching the first application safety level in the at least one candidate identity information corresponding to the processor (101, 1110).

5. The method for verifying access permission according to claim 3, wherein the determining, by the processor (101, 1110) based on the to-be-verified application, the processor identity information matching the to-be-verified application includes:
in response to running process switch, determining (113), by the processor (101, 1110), an application corresponding to a running process after the switch as the to-be-verified application, and determining, based on the to-be-verified application, the processor identity information matching the to-be-verified application.

6. The method for verifying access permission according to claim 4, wherein the performing access permission verification on the to-be-verified application based on the processor identity information included in the target access request includes:
verifying (310), by the verification circuit (201, 1120, 1-3), the processor identity information based on the processor identity information included in the target access request and a verification rule preset in the verification circuit (201, 1120, 1-3);
in response to that the processor identity information is successfully verified, determining (320), by the verification circuit (201, 1120, 1-3), that the to-be-verified application has permission to access the peripheral (1-3) through the processor (101, 1110), and allowing the target access request to proceed; and
in response to that the verification of the processor identity information fails, determining (330), by the verification circuit (201, 1120, 1-3), that the to-be-verified application does not have permission to access the peripheral (1-3) through the processor (101, 1110).

7. The method for verifying access permission according to claim 6, further including: before the verifying, by the verification circuit (201, 1120, 1-3), the processor identity information,
obtaining (400), by the verification circuit (201, 1120, 1-3), candidate identity information matching a second application safety level of the peripheral (1-3), to serve as whitelist identity information; and
setting (500), by the verification circuit (201, 1120, 1-3), the verification rule based on the whitelist identity information.

8. An integrated circuit system (1100), including:
a processor (101, 1110) and a verification circuit (201, 1120, 1-3), the verification circuit (201, 1120, 1-3) being coupled between the processor (101, 1110) and a peripheral (1-3), wherein
the processor (101, 1110) is configured for, in response to that a to-be-verified application requests to access the peripheral (1-3) through the processor (101, 1110), generating a target access request including processor identity information, and sending the target access request to the peripheral (1-3), wherein the processor identity information is configured for calling the processor (101, 1110) to access the peripheral (1-3) by the to-be-verified application; and
the verification circuit (201, 1120, 1-3) is configured for intercepting the target access request, and performing access permission verification on the to-be-verified application based on the processor identity information included in the target access request.

9. The integrated circuit system (1100) according to claim 8, wherein the processor (101, 1110) is configured to run instructions stored in memory for: determining, based on an application safety level of the to-be-verified application, an accessible range of addresses for the to-be-verified application; and in response to that an access address to which the peripheral is mapped in an address space corresponding to the processor (101, 1110) falls within the accessible range of addresses, sending the target access request to the peripheral.

10. The integrated circuit system (1100) according to claim 8 or 9, wherein the processor (101, 1110) is configured to run instructions stored in memory for: determining, based on the to-be-verified application, the processor identity information matching the to-be-verified application in at least one candidate identity information corresponding to the processor (101, 1110).

11. The integrated circuit system (1100) according to claim 10, wherein the processor (101, 1110) is configured to run instructions stored in memory for: determining a first application safety level corresponding to the to-be-verified application; and determining, based on the first application safety level, the processor identity information matching the first application safety level in the at least one candidate identity information corresponding to the processor (101, 1110).

12. The integrated circuit system (1100) according to claim 10, wherein the processor (101, 1110) is configured to run instructions stored in memory for: in response to running process switch, determining an application corresponding to a running process after the switch as the to-be-verified application, and determining the processor identity information matching the to-be-verified application based on the to-be-verified application.

13. The integrated circuit system (1100) according to claim 11, wherein the verification circuit (201, 1120, 1-3) is configured to run instructions stored in memory for: verifying the processor identity information based on the processor identity information included in the target access request and a verification rule preset in the verification circuit (201, 1120, 1-3); in response to that the processor identity information is successfully verified, determining that the to-be-verified application has permission to access the peripheral through the processor (101, 1110), and allowing the target access request to pass; and in response to that the verification of the processor identity information fails, determining that the to-be-verified application does not have permission to access the peripheral through the processor (101, 1110).

14. An electronic device (1200), including one or more processors (1210) and a memory (1220), wherein the memory (1220) stores computer instructions; and the computer instructions, when run by the one or more processors (1210), enable the one or more processors (1210) to implement the method according to any one of claims 1 to 7.

15. A computer-readable storage medium, on which computer program instructions are stored, wherein the computer program instructions, when executed by a processor, enable the processor to implement the method according to any one of claims 1 to 7.
